# EUROPÄISCHE PATENTSCHRIFT

(11) **EP 4 094 984 B1**
(45) Veröffentlichungstag und Bekanntmachung des Hinweises auf die Patenterteilung: **19.02.2025**
(21) Anmeldenummer: 21176621.7
(22) Anmeldetag: 28.05.2021
(51) Int. Cl.: B60P 3/41, B62D 33/02, B66C 3/20, B66C 23/00, B66C 23/90, B66C 23/44

(54) **FAHRZEUGAUFBAU**
VEHICLE SUPERSTRUCTURE
CARROSSERIE DE VÉHICULE

(43) Veröffentlichungstag der Anmeldung: 30.11.2022
(73) Patentinhaber: EPSILON Kran GmbH., 5020 Salzburg (AT)
(72) Erfinder: STEINDL, Johannes, 5061 Elsbethen (AT)
(74) Vertreter: Torggler & Hofmann Patentanwälte - Innsbruck

(56) Entgegenhaltungen:
- CA-A1- 3 107 402
- JP-A- H09 165 193
- SE-A1- 1 450 685
- SE-C2- 536 428
- US-B2- 10 427 582

## Beschreibung

Die vorliegende Erfindung betrifft einen Fahrzeugaufbau mit den Merkmalen des Oberbegriffs des Anspruchs 1, ein Fahrzeug, insbesondere Transportfahrzeug für den Transport land- oder forstwirtschaftlicher Güter, mit einem solchen Fahrzeugaufbau und ein Verfahren zum Ausgeben eines Warnsignals bei einem solchen Fahrzeugaufbau.

Fahrzeuge für den Transport land- oder forstwirtschaftlicher Güter, wie beispielsweise Baumstämme, (Press-)Ballen, Äste und dergleichen, weisen einen Fahrzeugaufbau auf, der üblicherweise eine sich in einer Längsrichtung erstreckende Tragstruktur und einen an der Tragstruktur angeordneten Rungenaufbau umfasst. Bei einem derartigen Transportfahrzeug kann es sich beispielsweise um einen Lastkraftwagen oder einen Forstanhänger handeln, welches mit einem Kran ausgestattet sein kann, um die land- oder forstwirtschaftlichen Güter auf den Fahrzeugaufbau aufzuladen oder vom Fahrzeugaufbau abzuladen (siehe z.B. US 10,427,582 B2). Der Rungenaufbau eines gattungsgemäßen Fahrzeugaufbaus weist wenigstens ein Rungenpaar umfassend zwei quer zur Längsrichtung beabstandet zueinander angeordnete Haltestangen in Form von Rungen zum Halten der land- oder forstwirtschaftlicher Güter auf.

Beim Abladen von Baumstämmen mittels eines Krans (z.B. eines am Fahrzeug selbst angeordneten Krans oder eines Radladers) mit einem Greifer als Arbeitsgerät, um die Baumstämme greifen und über den Rungenaufbau heben zu können, besteht bei einem herkömmlichen Fahrzeugaufbau insbesondere bei seitlich im Bereich der Rungen gelagerten Baumstämmen die Gefahr, dass der Fahrzeugaufbau oder daran befestigte Vorrichtungen (z.B. ein Hilfsrahmen des Fahrzeugaufbau oder daran befestigte Kotflügel oder Werkzeugkisten) beim Schließen des Greifers beschädigt wird bzw. werden, da die Position der Greiferspitze vom Bediener des Krans oft nicht richtig eingesehen oder eingeschätzt werden kann.

Aufgabe der Erfindung ist es, dieser Gefahr bzw. diesem Problem entgegenzuwirken. Insbesondere soll ein gegenüber dem Stand der Technik verbesserter Fahrzeugaufbau angegeben werden.

Diese Aufgabe wird durch einen Fahrzeugaufbau mit den Merkmalen des Anspruchs 1, ein Fahrzeug mit einem solchen Fahrzeugaufbau und ein Verfahren mit den Merkmalen des Anspruchs 14 gelöst. Vorteilhafte Ausführungsformen der Erfindung sind in den abhängigen Ansprüchen definiert.

Bei der Erfindung ist vorgesehen, dass der Fahrzeugaufbau wenigstens eine mit einer Signalisierungsvorrichtung signalleitend verbundene Erfassungsvorrichtung zur Erfassung eines sich in der Umgebung des Rungenaufbaus beweglichen Gegenstands umfasst, wobei Sensordaten der wenigstens einen Erfassungsvorrichtung der Signalisierungsvorrichtung meldbar sind, wobei von der Signalisierungsvorrichtung in Abhängigkeit von den Sensordaten ein Warnsignal ausgebbar ist. Bei dem zu erfassenden beweglichen Gegenstand kann es sich beispielsweise um ein an einem Kran oder Radlader angebrachtes Arbeitsgerät (z.B. einem Greifer zum Greifen von Baumstämmen) handeln, welches während der Manipulation von land- oder forstwirtschaftlichen Gütern in der Umgebung des Rungenaufbaus bewegt wird.

Dadurch kann dem Bediener eines Hebezeugs, zum Beispiel in Form eines Knickarmkrans, ein Warnsignal ausgegeben werden, wenn sich ein am Hebezeug angebrachtes Arbeitsgerät zum Be- oder Entladen land- oder forstwirtschaftlicher Güter dem Rungenaufbau nähert, sodass der Bediener auf eine drohende Kollision des Arbeitsgeräts mit dem Fahrzeugaufbau hingewiesen wird, noch bevor eine Beschädigung am Fahrzeugaufbau eintritt. Das Warnsignal kann dabei optisch und/oder akustisch sein.

Vorzugweise kann vorgesehen sein, dass die wenigstens eine Erfassungsvorrichtung wenigstens einen vorgegebenen oder vorgebbaren Erfassungsbereich aufweist, wobei die von der wenigstens einen Erfassungsvorrichtung an die Signalisierungsvorrichtung gemeldeten Sensordaten ein Detektionssignal umfassen, wenn die wenigstens eine Erfassungsvorrichtung einen Gegenstand innerhalb des wenigstens einen Erfassungsbereichs detektiert. Es kann dabei auch vorgesehen sein, dass eine Erfassungsvorrichtung mehrere vorgegebene oder vorgebbare Erfassungsbereiche aufweist und unterschiedliche Detektionssignale an die Signalisierungsvorrichtung gemeldet werden, je nachdem in welchem der Erfassungsbereiche ein Gegenstand detektiert wird. Dementsprechend können auch unterschiedliche Warnsignale ausgegeben werden. So ist es denkbar, dass die Detektion eines Gegenstands, zum Beispiel eines Greifers, in einem ersten Erfassungsbereich eine Vorwarnung (zum Beispiel leises Piepsen und/oder das Leuchten einer gelben Signalleuchte) verursacht und die Detektion des Gegenstands in einem zweiten, beispielsweise innerhalb des ersten Erfassungsbereichs oder näher zum Rungenaufbau liegenden, Erfassungsbereichs eine kritische Warnung (zum Beispiel lautes Piepsen und/oder das Leuchten einer roten Signalleuchte) verursacht.

Bei der wenigstens einen Erfassungsvorrichtung kann es sich um einen optischen Sensor handeln, bei dem wenigstens ein Detektionsbereich konfigurierbar sein kann, der dem wenigstens einen Erfassungsbereich entspricht.

Gemäß einer besonders bevorzugten Ausführungsform kann vorgesehen sein, dass die wenigstens eine Erfassungsvorrichtung einen Abstandssensor umfasst, wobei vorzugsweise die Sensordaten Abstandsinformationen eines vom Abstandssensor erfassten Gegenstands umfassen. Die Abstandsinformationen können dabei diskreter Natur sein, indem diese nur die Information beinhalten, ob ein Gegenstand detektiert wird oder nicht. Die Abstandsinformationen können aber auch den jeweiligen, vom Abstandssensor detektierten Abstand des Gegenstands vom Abstandssensor charakterisierende Daten sein, also beispielsweise konkrete Distanzwerte, die fortlaufend (zeitkontinuierlich oder zeitdiskret) vom Abstandssensor erfasst werden. Dabei kann vorgesehen sein, dass die Signalisierungsvorrichtung ein Warnsignal ausgibt, wenn der vom Abstandssensor erfasste Abstand zwischen dem Gegenstand und dem Abstandssensor einen vorgegebenen oder vorgebbaren Wert unterschreitet.

Beim Abstandssensor kann es sich dabei um einen akustischen oder elektromagnetischen (z.B. optischen) Distanzsensor handeln, der in an sich bekannter Weise eine Abstandsmessung zum zu erfassenden Gegenstand auf Basis einer Laufzeitmessung von vom Distanzsensor ausgesendeten und vom Gegenstand zurückreflektierten Schallwellen oder elektromagnetischen Wellen (z.B. Funkwellen oder Lichtwellen) durchführt.

Gemäß einer bevorzugten Ausführungsform kann vorgesehen sein, dass die Signalisierungsvorrichtung wenigstens einen Signalgeber und eine mit dem wenigstens einen Signalgeber signalleitend verbundene Steuervorrichtung umfasst, der die Sensordaten der wenigstens einen Erfassungsvorrichtung meldbar sind, wobei die Steuervorrichtung dazu konfiguriert ist, in Abhängigkeit von den Sensordaten der wenigstens einen Erfassungsvorrichtung dem wenigstens einen Signalgeber ein Steuersignal zu melden, wobei vom wenigstens einen Signalgeber in Abhängigkeit vom Steuersignal das Warnsignal ausgebbar ist.

Dabei kann vorgesehen sein, dass der wenigstens eine Signalgeber als optischer Signalgeber, vorzugsweise Signalleuchte, und/oder als akustischer Signalgeber ausgebildet ist.

Vorzugweise kann vorgesehen sein, dass die wenigstens eine Erfassungsvorrichtung am Rungenaufbau angeordnet ist. So kann vorgesehen sein, dass die wenigstens eine Erfassungsvorrichtung an oder in einer Runge angeordnet ist.

Der Rungenaufbau kann wenigstens eine an der Tragstruktur angeordnete und sich im Wesentlichen senkrecht zur Längsrichtung erstreckende Rungenbank umfassen, an deren Enden die Rungen angeordnet sind. Die wenigstens eine Erfassungsvorrichtung kann dabei an oder in der wenigstens einen Rungenbank angeordnet sein.

Es ist vorgesehen, dass an der Tragstruktur wenigstens ein sich im Wesentlichen senkrecht zur Längsrichtung erstreckender Querbalken angeordnet ist, wobei der wenigstens eine Querbalken in Längsrichtung vor oder hinter dem wenigstens einen Rungenpaar angeordnet ist, wobei die wenigstens eine Erfassungsvorrichtung am wenigstens einen Querbalken angeordnet ist. Durch vor oder hinter den Rungenpaaren angeordnete Querbalken kann eine Beschädigungsgefahr des Fahrzeugaufbaus verringert werden, indem beispielsweise ein Greifer im Bereich zwischen zwei in Längsrichtung beabstandeten Rungen nicht mit dem Rungenaufbau oder der Tragstruktur selbst sondern mit den als mechanischen Schutz vorgesehenen Querbalken kollidieren würde. Durch die Anordnung der wenigstens einen Erfassungsvorrichtung am oder im wenigstens einen Querbalken kann darüber hinaus auch die Gefahr einer Kollision mit den Querbalken reduziert werden, da bei Detektion eines Greifers im Erfassungsbereich der Erfassungsvorrichtung ein Warnsignal ausgegeben werden kann.

Es ist vorgesehen, dass die wenigstens eine Erfassungsvorrichtung in oder an einem Balkenende des wenigstens einen Querbalkens angeordnet ist, wobei vorzugsweise in oder an beiden Balkenenden jeweils eine Erfassungsvorrichtung angeordnet ist. Die Erfassungsvorrichtungen können dabei in an den Balkenenden dafür vorgesehenen Ausnehmungen angeordnet sein, sodass die Erfassungsvorrichtungen im Wesentlichen vollständig geschützt innerhalb der Querbalken angeordnet sind und nur die für *(weiter auf Seite* 6 *der ursprünglich eingereichten Beschreibung)* die Erfassung eines Gegenstands nötigen Teile der Erfassungsvorrichtungen freiliegen.

Gemäß einem bevorzugten Ausführungsbeispiel kann vorgesehen sein, dass der Rungenaufbau wenigstens eine an der Tragstruktur angeordnete und sich im Wesentlichen senkrecht zur Längsrichtung erstreckende Rungenbank umfasst, an deren Enden das wenigstens eine Rungenpaar angeordnet ist, wobei der wenigstens eine Querbalken in Längsrichtung vor oder hinter der wenigstens einen Rungenbank angeordnet ist. Bei einem derartigen Rungenaufbau stehen von den Rungenbänken an deren Enden jeweils die Haltestangen in Form der Rungen senkrecht ab.

Vorzugweise kann dabei vorgesehen sein, dass der Rungenaufbau wenigstens zwei in Längsrichtung voneinander beabstandete Rungenbänke umfasst, wobei in Längsrichtung betrachtet jeweils zwischen zwei Rungenbänken ein Querbalken angeordnet ist. Mit anderen Worten kann vorgesehen sein, dass zwischen allen in Längsrichtung zueinander beabstandet angeordneten Rungenpaaren ein Querbalken als mechanischer Schutz sowie zur Erfassung von für den Fahrzeugaufbau gefährlichen Gegenständen angeordnet ist. Insbesondere können die an den Querbalken angeordneten Erfassungsvorrichtungen das Eintreten eines Gegenstands zwischen zwei Rungenpaaren erfassen.

In einer besonders bevorzugten Ausführungsvariante kann vorgesehen sein, dass die Tragstruktur wenigstens einen an oder auf einem Fahrzeugrahmen des Fahrzeugs zu befestigenden Hilfsrahmen umfasst. Der Rungenaufbau kann dabei zumindest abschnittsweise am Hilfsrahmen angeordnet sein, ebenso wie gegebenenfalls vorhandene Querbalken zwischen den Rungenpaaren. Bei am Hilfsrahmen angeordneten Querbalken können deren Balkenenden über den Hilfsrahmen hinausragen.

Vorzugweise kann vorgesehen sein, dass der Fahrzeugaufbau eine Stirnwand umfasst, wobei die Signalisierungsvorrichtung an der Stirnwand angeordnet ist.

Gemäß einem weiteren Ausführungsbeispiel kann vorgesehen sein, dass der Fahrzeugaufbau einen Kran, vorzugsweise Knickarmkran, mit einem an einer Kranspitze des Krans angeordneten Arbeitsgerät, vorzugsweise einem Greifer zum Greifen land- oder forstwirtschaftlicher Güter, umfasst.

Schutz wird auch begehrt für ein Fahrzeug, insbesondere Transportfahrzeug für den Transport land- oder forstwirtschaftlicher Güter, mit einem erfindungsgemäßen Fahrzeugaufbau. Bei einem derartigen Transportfahrzeug kann es sich beispielsweise um einen Lastkraftwagen oder einen Forstanhänger handeln.

Des Weiteren wird Schutz begehrt für ein Verfahren zum Ausgeben eines Warnsignals bei einem erfindungsgemäßen Fahrzeugaufbau, wobei bei Erfassung eines sich in der Umgebung des Rungenaufbaus des Fahrzeugaufbaus beweglichen Gegenstands durch die wenigstens eine Erfassungsvorrichtung in Abhängigkeit von den Sensordaten der wenigstens einen Erfassungsvorrichtung ein Warnsignal ausgegeben wird.

Weitere Einzelheiten und Vorteile der vorliegenden Erfindung werden anhand der nachfolgenden Figurenbeschreibung erläutert. Dabei zeigen:
- Fig. 1: ein Ausführungsbeispiel eines vorgeschlagenen Fahrzeugaufbaus auf einem Fahrzeug in einer Seitenansicht,
- Fig. 2: ein weiteres Ausführungsbeispiel eines vorgeschlagenen Fahrzeugaufbaus auf einem Fahrzeug in einer Rückansicht,
- Fig. 3: ein weiteres Ausführungsbeispiel eines vorgeschlagenen Fahrzeugaufbaus in einer perspektivischen Ansicht,
- Fig. 4: einen Querbalken und eine Signalisierungsvorrichtung eines vorgeschlagenen Fahrzeugaufbaus in einer perspektivischen Ansicht,
- Fig. 5: den Querbalken der Figur 4 in einer Seitenansicht,
- Fig. 6: einen Querbalken und eine weitere Signalisierungsvorrichtung eines vorgeschlagenen Fahrzeugaufbaus in einer perspektivischen Ansicht, und
- Fig. 7: ein weiteres Ausführungsbeispiel eines vorgeschlagenen Fahrzeugaufbaus auf einem Fahrzeug in einer Seitenansicht.

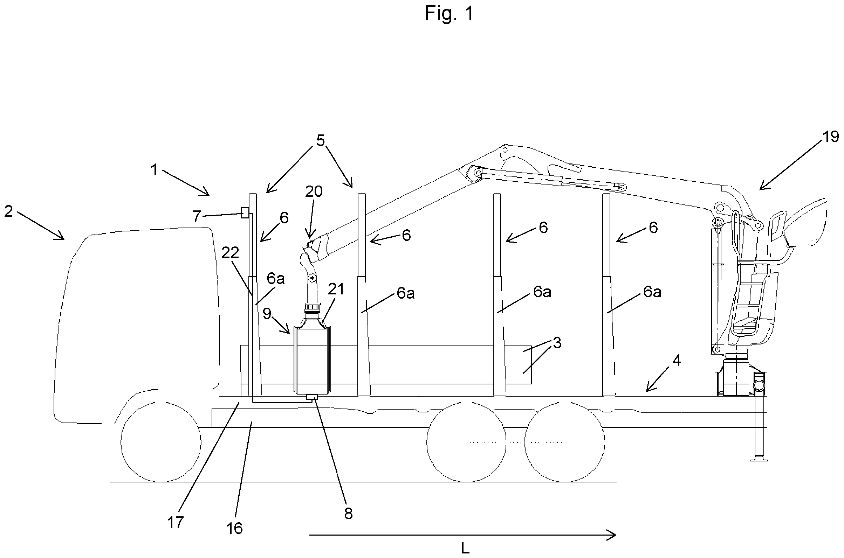

Figur 1 zeigt in einer Seitenansicht ein Fahrzeug 2 in Form eines als Lastkraftwagen ausgebildeten Transportfahrzeugs für den Transport land- oder forstwirtschaftlicher Güter 3, bei denen es sich im gezeigten Beispiel um Baumstämme handelt.

Auf dem Fahrzeug 2 ist ein vorgeschlagener Fahrzeugaufbau 1 angeordnet. Der Fahrzeugaufbau 1 umfasst eine sich in einer Längsrichtung L erstreckende Tragstruktur 4 und einen an der Tragstruktur 4 angeordneten Rungenaufbau 5. Der Rungenaufbau 5 umfasst im gezeigten Beispiel vier in Längsrichtung L beabstandet zueinander angeordnete Rungenpaare 6, wobei jedes Rungenpaar 6 zwei quer zur Längsrichtung L beabstandet zueinander angeordnete Haltestangen 6a, 6b in Form von Rungen zum Halten der land- oder forstwirtschaftlicher Güter 3 umfasst. Aufgrund der Seitenansicht ist jeweils nur eine Haltestange 6a des jeweiligen Rungenpaars 6 ersichtlich, die zweite Haltestange 6b eines Rungenpaars 6 befindet sich in dieser Ansicht jeweils hinter der ersten Haltestange 6a.

Die Tragstruktur 4 umfasst in der gezeigten Ausführungsform einen Hilfsrahmen 17, der auf einem Fahrzeugrahmen 16 des Fahrzeugs 2 befestigt ist.

Der Fahrzeugaufbau 1 umfasst des Weiteren einen Kran 19 in Form eines Knickarmkrans. An einer Kranspitze 20 des Krans 19 ist ein Arbeitsgerät 21 in Form eines Greifer zum Greifen der land- oder forstwirtschaftlichen Güter 3 angeordnet.

Dieser Greifer stellt den beweglichen Gegenstand 9 dar, der vom vorgeschlagenen Fahrzeugaufbau 1 detektiert werden soll, wenn er sich dem Rungenaufbau 5 nähert, um ein Warnsignal auszugeben, sodass der Bediener des Krans 19 auf eine drohende Kollision des Greifers mit dem Fahrzeugaufbau 1 hingewiesen wird, noch bevor eine Beschädigung am Fahrzeugaufbau 1 eintritt.

Dazu umfasst der vorgeschlagene Fahrzeugaufbau 1 wenigstens eine mit einer Signalisierungsvorrichtung 7 signalleitend verbundene Erfassungsvorrichtung 8 zur Erfassung des sich in der Umgebung des Rungenaufbaus 5 beweglichen Gegenstands 9 (hier in Form des Greifers). Die Erfassungsvorrichtung 8 ist über eine Sensorleitung 22 mit der Signalisierungsvorrichtung 7 signalleitend verbunden.

Bei der Sensorleitung 22 zur Übermittlung von Sensordaten von der wenigstens einen Erfassungsvorrichtung 8 zur Signalisierungsvorrichtung 7 kann es sich um eine drahtgebundene (z.B. über ein Kabel oder einen Draht) oder drahtlose Verbindung (z.B. über WLAN oder Bluetooth) handeln. Die Sensordaten können über die Sensorleitung 22 analog oder digital, vorzugsweise unter Verwendung an sich bekannter Schnittstellen und Datenübertragungsprotokolle, übertragen werden.

Die Erfassungsvorrichtung 8 kann als akustischer Sensor (zum Beispiel Ultraschallsensor), als optischer Sensor (zum Beispiel eine Kamera) oder allgemein als mit elektromagnetischen Wellen arbeitender Sensor ausgebildet sein. Sensordaten der wenigstens einen Erfassungsvorrichtung 8 werden über die Sensorleitung 22 der Signalisierungsvorrichtung 7 gemeldet. In Abhängigkeit von den Sensordaten kann die Signalisierungsvorrichtung 7 ein Warnsignal ausgeben. Wenn beispielsweise die Signalisierungsvorrichtung 7 aufgrund der Sensordaten der Erfassungsvorrichtung 8 feststellt, dass sich der Gegenstand 9 dem Rungenaufbau 5 nähert, so kann diese ein Warnsignal ausgeben, bei dem es sich um ein optisches und/oder akustisches Signal handeln kann.

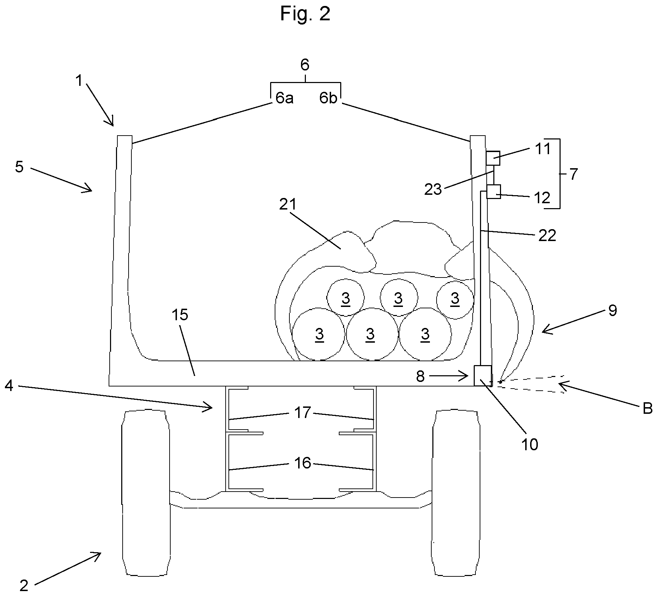

Figur 2 zeigt eine Rückansicht auf ein weiteres Ausführungsbeispiel eines vorgeschlagenen Fahrzeugaufbaus 1, der auf einem Fahrzeug 2 angeordnet ist. Das Fahrzeug 2 umfasst einen Fahrzeugrahmen 16. Die Tragstruktur 4 des Fahrzeugaufbaus 1 umfasst einen Hilfsrahmen 17, der auf dem Fahrzeugrahmen 16 angeordnet ist. Auf der Tragstruktur 4 ist ein Rungenaufbau 5 angeordnet, der mehrere in Längsrichtung L (welche in der gezeigten Darstellung senkrecht zur Blattebene verläuft) beabstandet zueinander angeordnete Rungenpaare 6 umfasst. Konkret sind im gezeigten Beispiel an der Tragstruktur 4 sich im Wesentlichen senkrecht zur Längsrichtung L erstreckende Rungenbänke 15 angeordnet, an deren Enden die Haltestangen 6a, 6b eines Rungenpaars 6 angeordnet sind. Die Erfassungsvorrichtungen 8 befinden sich hierbei an oder in den Rungenbänken 15.

Die im Beispiel gezeigte Erfassungsvorrichtung 8 weist einen durch strichlierte Linien angedeuteten Erfassungsbereich B auf. Die von der Erfassungsvorrichtung 8 an die Signalisierungsvorrichtung 7 gemeldeten Sensordaten umfassen ein Detektionssignal, wenn die Erfassungsvorrichtung 8 einen Gegenstand 9 innerhalb des Erfassungsbereichs B detektiert. Sobald also, wie im Beispiel gezeigt, eine Greiferspitze des Greifer 21 in den Erfassungsbereich B gelangt, wird ein entsprechendes Detektionssignal über die Sensorleitung 22 an die Signalisierungsvorrichtung 7 gemeldet und diese kann ein Warnsignal ausgeben.

Im gezeigten Ausführungsbeispiel ist die Erfassungsvorrichtung 8 als Abstandssensor 10 ausgebildet und die Sensordaten können Abstandsinformationen des vom Abstandssensor 10 erfassten Gegenstands 9 umfassen. Dadurch kann ermöglicht werden, dass ein Warnsignal erst dann ausgegeben wird, wenn der vom Abstandssensor 10 erfasste Abstand zwischen dem Gegenstand 9 (zum Beispiel die Greiferspitze des Greifers 21 im gezeigten Beispiel) und dem Abstandssensor 10 einen vorgegebenen oder vorgebbaren Wert unterschreitet.

Die Signalisierungsvorrichtung 7 umfasst bei diesem Beispiel eine Steuervorrichtung 12 und einen Signalgeber 11. Die Erfassungsvorrichtung 8 in Form des Abstandssensors 10 ist über eine Sensorleitung 22 mit der Steuervorrichtung 12 signalleitend verbunden und die Steuervorrichtung 12 ist mit dem Signalgeber 11 über eine Signalleitung 23 signalleitend verbunden. Auch bei der Signalleitung 23 kann es sich um eine drahtgebundene (z.B. über ein Kabel oder einen Draht) oder drahtlose Verbindung (z.B. über WLAN oder Bluetooth) handeln. Die über die Signalleitung 23 gemeldeten Steuersignale für den Signalgeber 11 können analog oder digital, vorzugsweise unter Verwendung an sich bekannter Schnittstellen und Datenübertragungsprotokolle, übertragen werden. Sensordaten der Erfassungsvorrichtung 8 werden an die Steuervorrichtung 12 gemeldet. Diese ist dazu konfiguriert, in Abhängigkeit von den Sensordaten der Erfassungsvorrichtung 8 dem Signalgeber 11 ein Steuersignal zu melden, wobei vom Signalgeber 11 in Abhängigkeit vom Steuersignal das Warnsignal ausgebbar ist.

Der Signalgeber 11 kann als optischer Signalgeber, vorzugsweise als Signalleuchte, und/oder als akustischer Signalgeber ausgebildet sein.

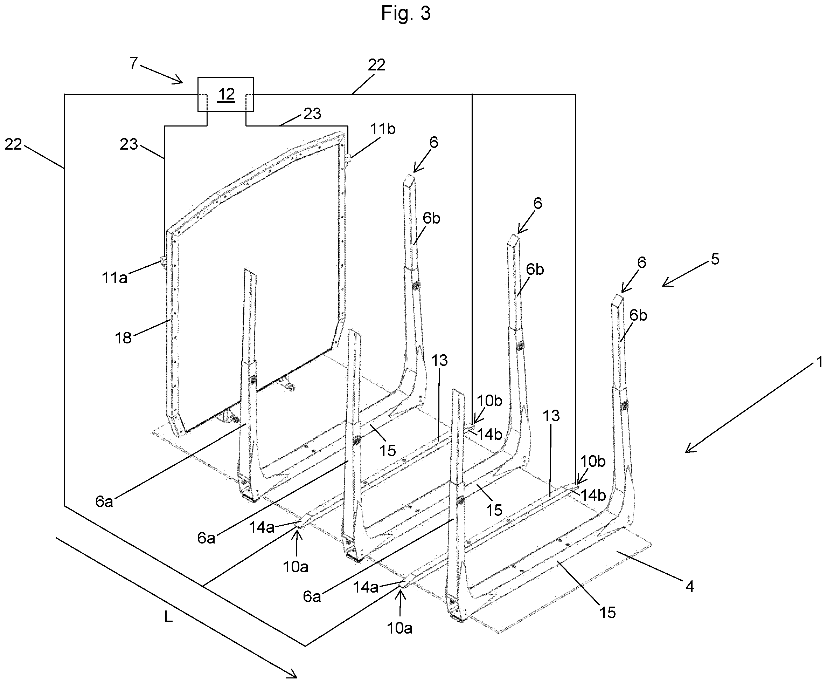

Figur 3 zeigt ein weiteres Ausführungsbeispiel eines vorgeschlagenen Fahrzeugaufbaus 1 in einer perspektivischen Ansicht. Der Fahrzeugaufbau 1 umfasst eine sich in Längsrichtung L erstreckende Tragstruktur 4. Auf der Tragstruktur 4 sind mehrere, in Längsrichtung L beabstandet zueinander angeordnete Rungenpaare 6 angebracht, welche einen Rungenaufbau 5 bilden. Die nach oben ragenden Haltestangen 6a, 6b eines Rungenpaars 6 sind dabei jeweils an den sich gegenüberliegenden Enden einer Rungenbank 15 angeordnet, die sich im Wesentlichen senkrecht zur Längsrichtung L erstreckt. Zwischen jeweils zwei Rungenpaaren 6 sind Querbalken 13 angeordnet. Diese bieten bereits einen mechanischen Schutz vor Beschädigung des Fahrzeugaufbaus 1 durch einen Greifer, wenn dieser zwischen zwei Rungenpaaren 6 agiert. An Balkenenden 14a, 14b eines jeden Querbalkens 13 sind Erfassungsvorrichtungen 8 in Form von Abstandssensoren 10a, 10b angeordnet, welche über hier schematisch dargestellte Sensorleitungen 22 mit einer Signalisierungsvorrichtung 7 signalleitend verbunden sind. Die Signalisierungsvorrichtung 7 umfasst einen ersten Signalgeber 11a und einen zweiten Signalgeber 11b sowie eine schematisch dargestellte Steuervorrichtung 12. Über schematisch dargestellte Signalleitungen 23 ist die Steuervorrichtung 12 mit den beiden Signalgebern 11a, 11b in Form von Warnleuchten signalleitend verbunden. Die beiden Signalgeber 11a, 11b sind an einem linken Endbereich und an einem rechten Endbereich des Fahrzeugaufbaus 1 angeordnet, im gezeigten Beispiel sind sie an einem linken Randbereich und an einem rechten Randbereich einer Stirnwand 18 des Fahrzeugaufbaus 1 angeordnet. Die Steuervorrichtung 12 kann dabei so konfiguriert sein, dass abhängig von den Sensordaten der in den ersten Balkenenden 14a der Querträger 13 angeordneten ersten Abstandssensoren 10a ein Warnsignal vom ersten Signalgeber 11a und abhängig von den Sensordaten der in den zweiten Balkenenden 14b der Querträger 13 angeordneten zweiten Abstandssensoren 10b ein Warnsignal vom zweiten Signalgeber 11b ausgegeben wird. Dies ist in der Abbildung durch die punktierten Verbindungslinien innerhalb der Steuervorrichtung 12 angedeutet. Mit anderen Worten gibt hier der in Blickrichtung entgegen der Längsrichtung L an der linken Seite des Fahrzeugaufbaus 1 angeordnete erste Signalgeber 11a ein Warnsignal aus, wenn sich ein Gegenstand 9 (zum Beispiel die Greiferspitze eines Greifers) von der linken Seite her gefährlich an den Fahrzeugaufbau 1 annähert und der an der rechten Seite des Fahrzeugaufbaus 1 angeordnete zweite Signalgeber 11b gibt ein Warnsignal aus, wenn sich ein Gegenstand 9 von der rechten Seite her gefährlich an den Fahrzeugaufbau 1 annähert.

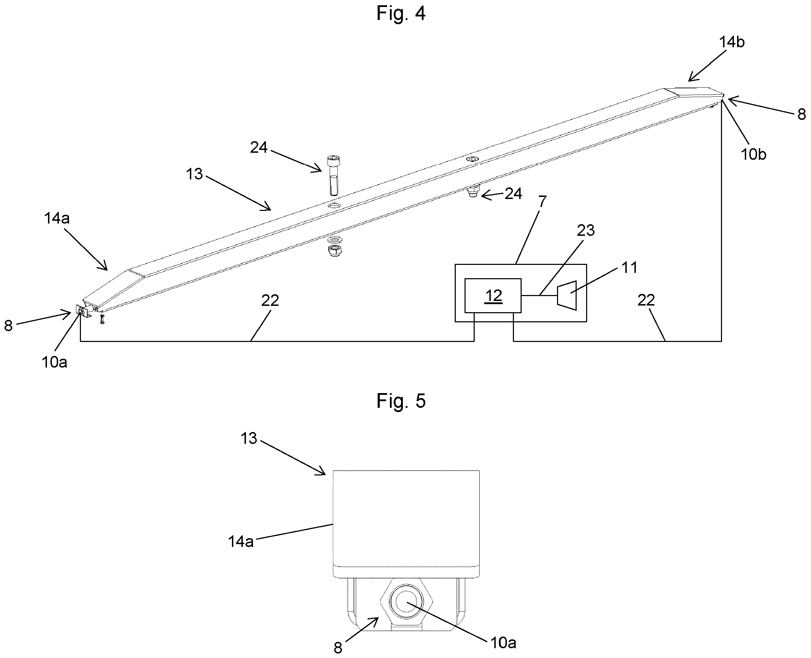

Figur 4 zeigt einen Querbalken 13, wie er bei einem vorgeschlagenen Fahrzeugaufbau 1 zum Einsatz kommen kann, in einer perspektivischen Ansicht und Figur 5 zeigt eine Ansicht auf ein erstes Balkenende 14a des Querbalkens 13. Im ersten Balkenende 14a ist eine Erfassungsvorrichtung 8 in Form eines ersten Abstandssensors 10a angeordnet. Dazu ist im ersten Balkenende 14a eine Ausnehmung ausgebildet, in die der erste Abstandssensors 10a eingeschoben werden kann. In der gezeigten Darstellung befindet sich der erste Abstandssensor 10a noch nicht in seiner vollständig eingeschobenen Position. In entsprechender Weise befindet sich auch im zweiten Balkenende 14b eine Erfassungsvorrichtung 8 in Form eines zweiten Abstandssensors 10b. Der Querbalken 13 kann über an sich bekannte Schraubverbindungen 24 auf der Tragstruktur 4 befestigt werden.

Schematisch ist dargestellt, dass der erste Abstandssensor 10a und der zweite Abstandssensor 10b jeweils über eine Sensorleitung 22 mit einer Steuervorrichtung 12 einer Signalisierungsvorrichtung 7 signalleitend verbunden sind. Ein Signalgeber 11 der Signalisierungsvorrichtung 7 ist über eine Signalleitung 23 mit der Steuervorrichtung 12 signalleitend verbunden. In Abhängigkeit von den Sensordaten der Abstandssensoren 10a, 10b kann somit die Signalisierungsvorrichtung 7 über dessen Signalgeber 11 ein Warnsignal ausgeben.

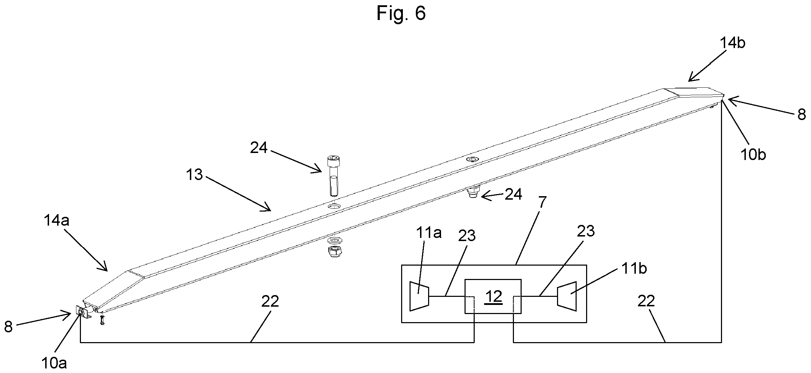

Figur 6 zeigt einen Querbalken 13 gemäß Figur 4. Im Unterschied zum Beispiel der Figur 4 umfasst hierbei die Signalisierungsvorrichtung 7 einen ersten Signalgeber 11a und einen zweiten Signalgeber 11b. Die beiden Signalgeber 11a, 11b können beispielsweise an einem linken Endbereich und an einem rechten Endbereich des Fahrzeugaufbaus 1 angeordnet sein, zum Beispiel an einem linken Randbereich und an einem rechten Randbereich einer Stirnwand 18 des Fahrzeugaufbaus 1. Die Steuervorrichtung 12 kann dabei so konfiguriert sein, dass abhängig von den Sensordaten der in den Querträgern 13 angeordneten ersten Abstandssensoren 10a ein Warnsignal vom ersten Signalgeber 11a und abhängig von den Sensordaten der in den Querträgern 13 angeordneten zweiten Abstandssensoren 10b ein Warnsignal vom zweiten Signalgeber 11b ausgegeben wird. Dies ist in der Abbildung durch die punktierten Verbindungslinien innerhalb der Steuervorrichtung 12 angedeutet. Mit anderen Worten gibt hier ein beispielsweise an der linken Seite des Fahrzeugaufbaus 1 angeordneter erster Signalgeber 11a ein Warnsignal aus, wenn sich ein Gegenstand 9 von der linken Seite her gefährlich an den Fahrzeugaufbau 1 annähert und ein an der rechten Seite des Fahrzeugaufbaus 1 angeordneter zweiter Signalgeber 11b gibt ein Warnsignal aus, wenn sich ein Gegenstand 9 von der rechten Seite her gefährlich an den Fahrzeugaufbau 1 annähert.

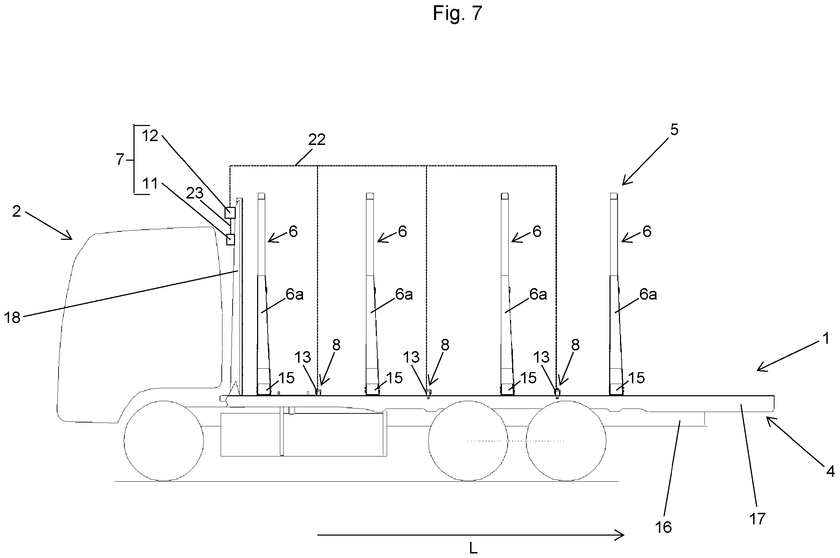

Figur 7 zeigt ein weiteres Ausführungsbeispiel eines vorgeschlagenen Fahrzeugaufbaus 1 in einer Seitenansicht. Der Fahrzeugaufbau 1 befindet sich auf einem Fahrzeugrahmen 16 eines Fahrzeugs 2 in Form eines Lastkraftwagens. Der Rungenaufbau 5 des Fahrzeugaufbaus 1 umfasst in diesem Beispiel vier in Längsrichtung L voneinander beabstandete, an der Tragstruktur 4 des Fahrzeugaufbaus 1 angeordnete und sich senkrecht zur Längsrichtung L erstreckende Rungenbänke 15, an deren Enden jeweils ein Rungenpaar 6 angeordnet ist. In Längsrichtung L betrachtet ist jeweils zwischen zwei Rungenbänken 15 ein Querbalken 13 angeordnet. Die Querbalken 13 können wie in Figur 4 oder Figur 6 dargestellt ausgebildet sein und mit in deren Balkenenden 14a, 14b angeordneten Erfassungsvorrichtungen 8 ausgestattet sein. Die Erfassungsvorrichtungen 8 sind über Sensorleitungen 22 mit einer Signalisierungsvorrichtung 7, die an einer Stirnwand 18 des Fahrzeugaufbaus 1 angeordnet ist, signalleitend verbunden. Die Signalisierungsvorrichtung 7 umfasst eine Steuervorrichtung 12 und einen mit der Steuervorrichtung 12 über eine Signalleitung 23 signalleitend verbundenen Signalgeber 11 zur Ausgabe eines Warnsignals.

### Bezugszeichenliste:

- 1: Fahrzeugaufbau
- 2: Fahrzeug
- 3: land- oder forstwirtschaftliches Gut
- 4: Tragstruktur
- 5: Rungenaufbau
- 6: Rungenpaar
- 6a, 6b: Haltestangen
- 7: Signalisierungsvorrichtung
- 8: Erfassungsvorrichtung
- 9: Gegenstand
- 10: Abstandssensor
- 10a: erster Abstandssensor
- 10b: zweiter Abstandssensor
- 11: Signalgeber
- 11a: erster Signalgeber
- 11b: zweiter Signalgeber
- 12: Steuervorrichtung
- 13: Querbalken
- 14a: erstes Balkenende
- 14b: zweites Balkenende
- 15: Rungenbank
- 16: Fahrzeugrahmen
- 17: Hilfsrahmen
- 18: Stirnwand
- 19: Kran
- 20: Kranspitze
- 21: Arbeitsgerät
- 22: Sensorleitung
- 23: Signalleitung
- 24: Schraubverbindung

- L: Längsrichtung
- B: Erfassungsbereich

## Patentansprüche

1. Fahrzeugaufbau (1) für ein Fahrzeug (2), insbesondere Transportfahrzeug für den Transport land- oder forstwirtschaftlicher Güter (3), mit einer sich in einer Längsrichtung (L) erstreckenden Tragstruktur (4) und einem an der Tragstruktur (4) angeordneten Rungenaufbau (5) mit wenigstens einem Rungenpaar (6) umfassend zwei quer zur Längsrichtung (L) beabstandet zueinander angeordneten Haltestangen (6a, 6b) in Form von Rungen zum Halten land- oder forstwirtschaftlicher Güter (3), wobei der Fahrzeugaufbau (1) wenigstens eine mit einer Signalisierungsvorrichtung (7) signalleitend verbundene Erfassungsvorrichtung (8) zur Erfassung eines sich in der Umgebung des Rungenaufbaus (5) beweglichen Gegenstands (9) umfasst, wobei Sensordaten der wenigstens einen Erfassungsvorrichtung (8) der Signalisierungsvorrichtung (7) meldbar sind, wobei von der Signalisierungsvorrichtung (7) in Abhängigkeit von den Sensordaten ein Warnsignal ausgebbar ist, **dadurch gekennzeichnet, dass** an der Tragstruktur (4) wenigstens ein sich im Wesentlichen senkrecht zur Längsrichtung (L) erstreckender Querbalken (13) angeordnet ist, wobei der wenigstens eine Querbalken (13) in Längsrichtung (L) vor oder hinter dem wenigstens einen Rungenpaar (6) angeordnet ist, wobei die wenigstens eine Erfassungsvorrichtung (8) am wenigstens einen Querbalken (13) angeordnet ist, wobei die wenigstens eine Erfassungsvorrichtung (8) in oder an einem Balkenende (14a, 14b) des wenigstens einen Querbalkens (13) angeordnet ist.

2. Fahrzeugaufbau nach Anspruch 1, **dadurch gekennzeichnet, dass** die wenigstens eine Erfassungsvorrichtung (8) wenigstens einen vorgegebenen oder vorgebbaren Erfassungsbereich (B) aufweist, wobei die von der wenigstens einen Erfassungsvorrichtung (8) an die Signalisierungsvorrichtung (7) gemeldeten Sensordaten ein Detektionssignal umfassen, wenn die wenigstens eine Erfassungsvorrichtung (8) einen Gegenstand (9) innerhalb des wenigstens einen Erfassungsbereichs (B) detektiert.

3. Fahrzeugaufbau nach Anspruch 1 oder 2, **dadurch gekennzeichnet, dass** die wenigstens eine Erfassungsvorrichtung (8) einen Abstandssensor (10, 10a, 10b) umfasst, wobei vorzugsweise die Sensordaten Abstandsinformationen eines vom Abstandssensor (10, 10a, 10b) erfassten Gegenstands (9) umfassen.

4. Fahrzeugaufbau nach einem der Ansprüche 1 bis 3, **dadurch gekennzeichnet, dass** die Signalisierungsvorrichtung (7) wenigstens einen Signalgeber (11, 11a, 11b) und eine mit dem wenigstens einen Signalgeber (11, 11a, 11b) signalleitend verbundene Steuervorrichtung (12) umfasst, der die Sensordaten der wenigstens einen Erfassungsvorrichtung (8) meldbar sind, wobei die Steuervorrichtung (12) dazu konfiguriert ist, in Abhängigkeit von den Sensordaten der wenigstens einen Erfassungsvorrichtung (8) dem wenigstens einen Signalgeber (11, 11a, 11b) ein Steuersignal zu melden, wobei vom wenigstens einen Signalgeber (11, 11a, 11b) in Abhängigkeit vom Steuersignal das Warnsignal ausgebbar ist.

5. Fahrzeugaufbau nach Anspruch 4, **dadurch gekennzeichnet, dass** der wenigstens eine Signalgeber (11, 11a, 11b) als optischer Signalgeber, vorzugsweise Signalleuchte, und/oder als akustischer Signalgeber ausgebildet ist.

6. Fahrzeugaufbau nach einem der Ansprüche 1 bis 5, **dadurch gekennzeichnet, dass** die wenigstens eine Erfassungsvorrichtung (8) am Rungenaufbau (5) angeordnet ist.

7. Fahrzeugaufbau nach einem der Ansprüche 1 bis 6, **dadurch gekennzeichnet, dass** in oder an beiden Balkenenden (14a, 14b) jeweils eine Erfassungsvorrichtung (8) angeordnet ist.

8. Fahrzeugaufbau nach einem der Ansprüche 1 bis 7, **dadurch gekennzeichnet, dass** der Rungenaufbau (5) wenigstens eine an der Tragstruktur (4) angeordnete und sich im Wesentlichen senkrecht zur Längsrichtung (L) erstreckende Rungenbank (15) umfasst, an deren Enden das wenigstens eine Rungenpaar (6) angeordnet ist, wobei der wenigstens eine Querbalken (13) in Längsrichtung (L) vor oder hinter der wenigstens einen Rungenbank (15) angeordnet ist.

9. Fahrzeugaufbau nach Anspruch 8, **dadurch gekennzeichnet, dass** der Rungenaufbau (5) wenigstens zwei in Längsrichtung (L) voneinander beabstandete Rungenbänke (15) umfasst, wobei in Längsrichtung (L) betrachtet jeweils zwischen zwei Rungenbänken (15) ein Querbalken (13) angeordnet ist.

10. Fahrzeugaufbau nach einem der Ansprüche 1 bis 9, **dadurch gekennzeichnet, dass** die Tragstruktur (4) wenigstens einen an oder auf einem Fahrzeugrahmen (16) des Fahrzeugs (2) zu befestigenden Hilfsrahmen (17) umfasst.

11. Fahrzeugaufbau nach einem der Ansprüche 1 bis 10, **dadurch gekennzeichnet, dass** der Fahrzeugaufbau (1) eine Stirnwand (18) umfasst, wobei die Signalisierungsvorrichtung (7) an der Stirnwand (18) angeordnet ist.

12. Fahrzeugaufbau nach einem der Ansprüche 1 bis 11, **dadurch gekennzeichnet, dass** der Fahrzeugaufbau (1) einen Kran (19), vorzugsweise Knickarmkran, mit einem an einer Kranspitze (20) des Krans (19) angeordneten Arbeitsgerät (21), vorzugsweise einem Greifer zum Greifen land- oder forstwirtschaftlicher Güter (3), umfasst.

13. Fahrzeug (2), insbesondere Transportfahrzeug für den Transport land- oder forstwirtschaftlicher Güter (3), mit einem Fahrzeugaufbau (1) nach einem der Ansprüche 1 bis 12.

14. Verfahren zum Ausgeben eines Warnsignals bei einem Fahrzeugaufbau (1) nach einem der Ansprüche 1 bis 12, wobei bei Erfassung eines sich in der Umgebung des Rungenaufbaus (5) des Fahrzeugaufbaus (1) beweglichen Gegenstands (9) durch die wenigstens eine Erfassungsvorrichtung (8) in Abhängigkeit von den Sensordaten der wenigstens einen Erfassungsvorrichtung (8) ein Warnsignal ausgegeben wird.

## Claims

1. A vehicle superstructure (1) for a vehicle (2), in particular a transport vehicle for the transport of agricultural or forestry goods (3), with a support structure (4) extending in a longitudinal direction (L) and a stanchion structure (5) arranged on the support structure (4) with at least one pair of stanchions (6) comprising two holding rods (6a, 6b) arranged transversely to the longitudinal direction (L) and spaced from one another in the form of stanchions for holding agricultural or forestry goods (3), wherein the vehicle superstructure (1) comprises at least one detection device (8) connected in a signal-conducting manner to a signaling device (7) for detecting an object (9) moving in the vicinity of the stanchion structure (5), wherein sensor data from the at least one detection device (8) can be reported to the signaling device (7), wherein a warning signal can be output by the signaling device (7) depending on the sensor data, **characterized in that** at least one crossbeam (13) extending essentially perpendicular to the longitudinal direction (L) is arranged on the support structure (4), wherein the at least one crossbeam (13) is arranged in the longitudinal direction (L) in front of or behind the at least one pair of stanchions (6), wherein the at least one detection device (8) is arranged on the at least one crossbeam (13), wherein the at least one detection device (8) is arranged in or on a beam end (14a, 14b) of the at least one crossbeam (13).

2. The vehicle superstructure according to claim 1, **characterized in that** the at least one detection device (8) has at least one predetermined or predeterminable detection range (B), wherein the sensor data reported by the at least one detection device (8) to the signaling device (7) comprise a detection signal when the at least one detection device (8) detects an object (9) within the at least one detection range (B).

3. The vehicle superstructure according to claim 1 or 2, **characterized in that** the at least one detection device (8) comprises a distance sensor (10, 10a, 10b), wherein the sensor data preferably comprise distance information of an object (9) detected by the distance sensor (10, 10a, 10b).

4. The vehicle superstructure according to one of claims 1 **to 3, characterized in that** the signaling device (7) comprises at least one signal transmitter (11, 11a, 11b) and a control device (12) which is connected to the at least one signal transmitter (11, 11a, 11b) in a signal-conducting manner and to which the sensor data of the at least one detection device (8) can be reported, wherein the control device (12) is configured to report a control signal to the at least one signal transmitter (11, 11a, 11b) depending on the sensor data of the at least one detection device (8), wherein the warning signal can be output by the at least one signal transmitter (11, 11a, 11b) depending on the control signal.

5. The vehicle superstructure according to claim 4, **characterized in that** the at least one signal transmitter (11, 11a, 11b) is designed as an optical signal transmitter, preferably a signal light, and/or as an acoustic signal transmitter.

6. The vehicle superstructure according to one of claims 1 to 5, **characterized in that** the at least one detection device (8) is arranged on the stanchion structure (5).

7. The vehicle superstructure according to one of claims 1 to 6, **characterized in that** a detection device (8) is arranged in or at both beam ends (14a, 14b).

8. The vehicle superstructure according to one of claims 1 to 7, **characterized in that** the stanchion structure (5) comprises at least one stanchion bank (15) arranged on the support structure (4) and extending substantially perpendicular to the longitudinal direction (L), at the ends of which the at least one pair of stanchions (6) is arranged, wherein the at least one crossbeam (13) is arranged in the longitudinal direction (L) in front of or behind the at least one stanchion bank (15).

9. The vehicle superstructure according to claim 8, **characterized in that** the stanchion structure (5) comprises at least two stanchion banks (15) spaced apart from one another in the longitudinal direction (L), wherein a crossbeam (13) is arranged between each two stanchion banks (15) when viewed in the longitudinal direction (L).

10. The vehicle superstructure according to one of claims 1 to 9, **characterized in that** the supporting structure (4) comprises at least one auxiliary frame (17) to be fastened to or on a vehicle frame (16) of the vehicle (2).

11. The vehicle superstructure according to one of claims 1 to 10, **characterized in that** the vehicle superstructure (1) comprises a front wall (18), wherein the signaling device (7) is arranged on the front wall (18).

12. The vehicle superstructure according to one of claims 1 to 11, **characterized in that** the vehicle superstructure (1) comprises a crane (19), preferably an articulated boom crane, with a working device (21), preferably a gripper for gripping agricultural or forestry goods (3), arranged on a crane tip (20) of the crane (19).

13. A vehicle (2), in particular a transport vehicle for the transport of agricultural or forestry goods (3), with a vehicle superstructure (1) according to one of claims 1 to 12.

14. A method for outputting a warning signal in a vehicle superstructure (1) according to one of claims 1 to 12, wherein, when an object (9) moving in the vicinity of the stanchion structure (5) of the vehicle superstructure (1) is detected by the at least one detection device (8), a warning signal is output depending on the sensor data of the at least one detection device (8).

## Revendications

1. Carrosserie de véhicule (1) pour un véhicule (2), en particulier un véhicule de transport pour le transport de marchandises agricoles ou forestières (3), avec une structure porteuse (4) s'étendant dans une direction longitudinale (L) et une structure à montants (5) disposée sur la structure porteuse (4) avec au moins une paire de montants (6) comprenant deux tiges de maintien (6a, 6b) disposées à distance l'une par rapport à l'autre de manière transversale par rapport à la direction longitudinale (L) sous la forme de montants destinés à maintenir des marchandises agricoles ou forestières (3), dans laquelle la carrosserie de véhicule (1) comprend au moins un dispositif de détection (8) reliée par acheminement de signaux à un dispositif de signalisation (7), destiné à détecter un objet (9) se déplaçant dans l'environnement de la structure à montants (5), dans laquelle des données de capteur de l'au moins un dispositif de détection (8) peuvent être notifiées au dispositif de signalisation (7), dans laquelle un signal d'avertissement peut être émis en fonction des données de capteur par le dispositif de signalisation (7), **caractérisée en ce qu'**au moins une poutre transversale (13) s'étendant de manière sensiblement perpendiculaire par rapport à la direction longitudinale (L) est disposée sur la structure porteuse (4), dans laquelle l'au moins une poutre transversale (13) est disposée dans la direction longitudinale (L) avant ou après l'au moins une paire de montants (6), dans laquelle l'au moins un dispositif de détection (8) est disposé sur l'au moins une poutre transversale (13), dans laquelle l'au moins un dispositif de détection (8) est disposé dans ou sur une extrémité de poutre (14a, 14b) de l'au moins une poutre transversale (13).

2. Carrosserie de véhicule selon la revendication 1, **caractérisée en ce que** l'au moins un dispositif de détection (8) présente au moins une zone de détection (B) prédéfinie ou pouvant être prédéfinie, dans laquelle les données de capteur notifiées au dispositif de signalisation (7) par l'au moins un dispositif de détection (8) comprennent un signal de détection lorsque l'au moins un dispositif de détection (8) détecte un objet (9) à l'intérieur de l'au moins une zone de détection (B).

3. Carrosserie de véhicule selon la revendication 1 ou 2, **caractérisée en ce que** l'au moins un dispositif de détection (8) comprend un capteur d'espacement (10, 10a, 10b), dans laquelle de préférence les données de capteur comprennent des informations d'espacement d'un objet (9) détecté par le capteur d'espacement (10, 10a, 10b).

4. Carrosserie de véhicule selon l'une quelconque des revendications 1 à 3, **caractérisée en ce que** le dispositif de signalisation (7) comprend au moins un générateur de signaux (11, 11a, 11b) et un dispositif de commande (12) relié par acheminement de signaux à l'au moins un générateur de signaux (11, 11a, 11b), auquel les données de capteur de l'au moins un dispositif de détection (8) peuvent être notifiées, dans laquelle le dispositif de commande (12) est configuré pour notifier un signal de commande à l'au moins un générateur de signaux (11, 11a, 11b) en fonction des données de capteur de l'au moins un dispositif de détection (8), dans laquelle le signal d'avertissement peut être émis en fonction du signal de commande par l'au moins un générateur de signaux (11, 11a, 11b).

5. Carrosserie de véhicule selon la revendication 4, **caractérisée en ce que** l'au moins un générateur de signaux (11, 11a, 11b) est réalisé en tant que générateur de signaux optique, de préférence en tant que feu de signalisation, et/ou en tant que générateur de signaux acoustique.

6. Carrosserie de véhicule selon l'une quelconque des revendications 1 à 5, **caractérisée en ce que** l'au moins un dispositif de détection (8) est disposé sur la structure à montants (5).

7. Carrosserie de véhicule selon l'une quelconque des revendications 1 à 6, **caractérisée en ce que** respectivement un dispositif de détection (8) est disposé dans ou sur les deux extrémités de poutre (14a, 14b).

8. Carrosserie de véhicule selon l'une quelconque des revendications 1 à 7, **caractérisée en ce que** la structure à montants (5) comprend au moins un banc de montant (15) disposé sur la structure porteuse (4) et s'étendant de manière sensiblement perpendiculaire par rapport à la direction longitudinale (L), sur les extrémités duquel l'au moins une paire de montants (6) est disposée, dans laquelle l'au moins une poutre transversale (13) est disposée dans la direction longitudinale (L) avant ou après l'au moins un banc de montant (15).

9. Carrosserie de véhicule selon la revendication 8, **caractérisée en ce que** la structure à montants (5) comprend au moins deux bancs de montant (15) espacés l'un de l'autre dans la direction longitudinale (L), dans laquelle une poutre transversale (13) est disposée respectivement entre deux bancs de montant (15) vue dans la direction longitudinale (L).

10. Carrosserie de véhicule selon l'une quelconque des revendications 1 à 9, **caractérisée en ce que** la structure porteuse (4) comprend au moins un châssis auxiliaire (17) à fixer contre ou sur un châssis de véhicule (16) du véhicule (2).

11. Carrosserie de véhicule selon l'une quelconque des revendications 1 à 10, **caractérisée en ce que** la carrosserie de véhicule (1) comprend une paroi frontale (18), dans laquelle le dispositif de signalisation (7) est disposé sur la paroi frontale (18).

12. Carrosserie de véhicule selon l'une quelconque des revendications 1 à 11, **caractérisée en ce que** la carrosserie de véhicule (1) comprend une grue (19), de préférence une grue à bras articulé, avec un appareil de travail (21) disposé sur une pointe de grue (20) de la grue (19), de préférence un grappin destiné à saisir des marchandises agricoles ou forestières (3).

13. Véhicule (2), en particulier véhicule de transport pour le transport de marchandises agricoles ou forestières (3), avec une carrosserie de véhicule (1) selon l'une quelconque des revendications 1 à 12.

14. Procédé d'émission d'un signal d'avertissement pour une carrosserie de véhicule (1) selon l'une quelconque des revendications 1 à 12, dans lequel lors de la détection d'un objet (9) se déplaçant dans l'environnement de la structure à montants (5) de la carrosserie de véhicule (1) par l'au moins un dispositif de détection (8), un signal d'avertissement est émis en fonction des données de capteur de l'au moins un dispositif de détection (8).
